# EUROPEAN PATENT APPLICATION

(11) **EP 4 592 235 A1**
(43) Date of publication of application: **30.07.2025**
(21) Application number: 24153413.0
(22) Date of filing: 23.01.2024
(51) Int. Cl.: B66B 1/34

(54) **A METHOD, AN ARRANGEMENT AND A PEOPLE CONVEYOR AND/OR AN ACCESS GATE SYSTEM FOR HANDLING APPLICATION PROGRAMMING INTERFACE REQUESTS**

(71) Applicant: KONE Corporation, 00330 Helsinki (FI)
(72) Inventor: Kemppainen, Mika, 00330 Helsinki (FI); Pirttimaa, Viljami, 00330 Helsinki (FI)
(74) Representative: Berggren Oy

(57) **Abstract**

An arrangement, a people conveyor and/or an access gate system and a method for handling people conveyor and/or access gate system application programming interface (API) requests, the method comprising receiving a request through a primary people conveyor and/or access gate system application programming interface (API), determining the target system of the request, based on the identified target system of the request being a first provider people conveyor and/or access gate system, sending the request, e.g. without processing, to an application programming interface (API) of the first provider people conveyor and/or access gate system, and based on the identified target system of the request being a second or further provider people conveyor and/or access gate system, processing the request and sending the processed request to an application programming interface (API) of the second or further provider people conveyor and/or access gate system and/or a controlling interface of the second or further provider people conveyor and/or access gate system.

## Description

### Technical Field

The invention concerns in general the technical field of people conveyor and access gate technology. Especially the invention concerns an arrangement, a people conveyor and/or an access gate system and a method for handling application programming interface (API) requests.

### Background

Typically, elevators and escalators are controlled by a combination of hardware and software systems to ensure safe and efficient operation. For example an elevator control system manages various aspects of elevator functionality, such as floor selection, door operation and safety features.

Separately, also access gate systems are known. Access gate systems can comprise one or more access gates which can be for example physical barriers or checkpoints that control entry or exit to a specific area, facility, or property. Access gates can be for example turnstiles sliding gates or swing gates which allow one person to pass through at a time.

Recently solutions have been emerging which enable external systems to interact with people conveyor systems and/or access gate systems. For example, some elevator and escalator manufacturers have developed application programming interface (API) based functionalities for elevators and escalators. An Application Programming Interface (API) is a set of rules and protocols that allows different software applications to communicate with each other. APIs define the methods and data formats that applications or devices can use to send requests and exchange information.

Elevator and escalator related Application Programming Interfaces (APIs) allow developers to control and interact with elevator systems or gather data from them. These kind of APIs can enable the integration of elevator control into building management systems, smart applications and automation solutions. The current elevator and escalator APIs are designed to control only devices for a certain manufacturer and therefore the users of these APIs have to implement multiple different solutions in order to operate with elevator and escalator systems from multiple manufacturers or even multiple generations or types of products from same manufacturer. This makes the integration complex, time consuming and expensive as the users of the APIs have to develop, maintain and test multiple systems for using with APIs of different manufacturers. Currently for example robot companies need to implement own technical integration to each equipment, e.g. elevators and escalators.

Also, all major elevator and escalator manufacturers offer maintenance services also to equipment manufactured by other manufacturers. Manufacturers can easily control and receive data from their own equipment but they have challenges to do the same with competitor equipment due to unknown communication protocols etc. This is limiting operational benefits in case of providing services to competitor equipment.

Hence, there is a need to develop further solutions in order to mitigate the described drawbacks.

### Summary

An objective of the invention is to present a method, an arrangement and a people conveyor and/or an access gate system for handling application programming interface (API) requests.

The objectives of the invention are reached by a method, an arrangement and a people conveyor and/or an access gate system as defined by the respective independent claims.

According to a first aspect, the invention relates to a method for handling people conveyor and/or access gate system application programming interface (API) requests. The method comprises receiving a request through a primary people conveyor and/or access gate system application programming interface (API), determining the target system of the request, based on the identified target system of the request being a first provider people conveyor and/or access gate system, sending the request, e.g. without processing, to an application programming interface (API) of the first provider people conveyor and/or access gate system, and based on the identified target system of the request being a second or further provider people conveyor and/or access gate system, processing the request and sending the processed request to an application programming interface (API) of the second or further provider people conveyor and/or access gate system and/or a controlling interface of the second or further provider people conveyor and/or access gate system.

In one embodiment of the invention the processing of the request comprises translating and/or modifying the request to be suitable for the application programming interface (API) of the first, second and/or further provider people conveyor and/or access gate system, e.g. so that the request corresponds the rules or format of the application programming interface (API) of the first, second and/or further provider people conveyor and/or access gate system.

In one embodiment of the invention the primary people conveyor and/or access gate system application programming interface is connected or in communication to at least one internal application programming interface (API), such as the application programming interface (API) of the first provider people conveyor and/or access gate system, and/or to at least one external application programming interface (API), such as the application programming interface (API) of the second or further provider people conveyor and/or access gate system.

In one embodiment of the invention the method further comprises receiving a response from the application programming interface to which the request was sent, and submitting the response or information related to the response to a device or an entity from which the request was received.

In one embodiment of the invention the method further comprises processing the received response and sending the processed response to the device or entity from which the request was received.

In one embodiment of the invention the processing of the response comprises translating and/or modifying the response according to the primary people conveyor and/or access gate system application programming interface, e.g. so that the request corresponds the rules or format of the primary people conveyor and/or access gate system application programming interface (API).

In one embodiment of the invention the processing of the request and/or response is carried out with a processing means, such as a technical integrator adaptor or interface.

In one embodiment of the invention the application programming interface (API) request is related to at least one of the following: an elevator call, a service robot utilizing an elevator, escalator and/or access gate system, elevator escalator and/or access gate equipment and/or device status, and/or elevator, escalator and/or access gate service status.

In one embodiment of the invention the primary people conveyor and/or access gate system application programming interface (API) comprises or is connected to a web portal which comprises means for integrating external systems to the people conveyor and/or access gate systems, such as the first provider people conveyor and/or access gate system and/or the second provider people conveyor and/or access gate system, via the primary people conveyor and/or access gate application programming interface (API).

In one embodiment of the invention the first provider people conveyor and/or access gate system, the second provider people conveyor and/or access gate system and or further provider people conveyor and/or access gate systems are elevator, escalator and/or access gate systems comprising elevators and controlling means for the elevators, escalators and controlling means for the escalators, and/or access gates and control means for the access gates.

According to a second aspect, the invention relates to an arrangement, such as a server or a service, for handling people conveyor and/or access gate system application programming interface (API) requests. The arrangement is configured to receive a request through a primary people conveyor and/or access gate system application programming interface (API), determine the target system of the request, based on the identified target system of the request being a first provider people conveyor and/or access gate system, to send the request, e.g. without processing, to an application programming interface (API) of the first provider people conveyor and/or access gate system, and based on the identified target system of the request being a second or further provider people conveyor and/or access gate system, to process the request and to send the processed request to an application programming interface (API) of the second or further provider people conveyor and/or access gate system and/or a controlling interface of the second or further provider people conveyor and/or access gate system.

In one embodiment of the invention the arrangement is configured to carry out a method according to any embodiment of the invention.

According to a third aspect, the invention relates to a people conveyor system, such as an elevator system or an escalator system, and/or an access gate system, comprising an arrangement, such as a server or a service, for handling a people conveyor and/or access gate system application programming interface (API) request, wherein the arrangement is an arrangement according to any embodiment of the invention.

According to a fourth aspect, the invention relates to a computer program comprising instructions which, when executed by a computer, such as a server or an arrangement, cause the computer to carry out a method according to any embodiment of the invention.

According to a fifth aspect, the invention relates to a computer-readable medium comprising the computer program according to any embodiment of the invention.

One advantage of the method, the arrangement, and the people conveyor system according to the invention is that the with the solution of the invention it's enough that the users, e.g. system integrators or developers, use only one application programming interface (API) which API can then further use other APIs based on the system to which the API query relates to. This kind of solution makes all kind of integration work faster and more reliable when there is no need for the developers e.g. to think which people conveyor system types need to be integrated to other building systems. The solution of the invention also helps with the people conveyor servicing entities to control and acquire information from systems that are manufactured by different manufacturers than the servicing entity as a single API can be used to control and receive information from people conveyor systems and/or access gates of different manufacturers. The solution of the invention also helps robot companies to make integration faster as they can use a single controlling API no matter which people conveyor or access gate device their robots use.

The exemplary embodiments of the invention presented in this patent application are not to be interpreted to pose limitations to the applicability of the appended claims. The verb "to comprise" is used in this patent application as an open limitation that does not exclude the existence of also un-recited features. The features recited in dependent claims are mutually freely combinable unless otherwise explicitly stated.

The expression "a number of" may herein refer to any positive integer starting from one (1). The expression "a plurality of" may refer to any positive integer starting from two (2), respectively.

The novel features which are considered as characteristic of the invention are set forth in particular in the appended claims. The invention itself, however, both as to its construction and its method of operation, together with additional objectives and advantages thereof, will be best understood from the following description of specific embodiments when read in connection with the accompanying drawings.

### Brief descriptions of the drawings

The embodiments of the invention are illustrated by way of example, and not by way of limitation, in the figures of the accompanying drawings.
Figure 1 illustrates schematically a solution according to an example embodiment of the invention.
Figure 2 illustrates an example embodiment of an elevator with which the solution of the invention can be used.
Figure 3 illustrates an example embodiment of an escalator with which the solution of the invention can be used.
Figure 4 illustrates one example method according to one example embodiment of the invention.

### Description of some embodiments

In the solution of the invention requests for different people conveyor and access gate systems can be handled via one application programming interface (API). In this application this one application programming interface (API) via which the requests for different people conveyor and/or access gate systems can be handled is called in this patent application as a primary system API or a primary people conveyor and/or access gate system API. The functionality of this application programming interface (API) can be implemented e.g. at a server or a service, such as a cloud service. The developers can access and/or control the application programming interface (API) via cloud environment and/or e.g. via a portal.

Application Programming Interfaces (APIs) used in the solution of the invention are software interfaces that allow developers to interact with and control elevator, escalator and/or access gate systems and/or gather data from them programmatically. These APIs enable the integration of elevator, escalator and access gate control into building management systems, smart applications and automation solutions. The availability and functionality of APIs can vary depending on the manufacturer and the specific system being used.

In one embodiment of the invention the primary people conveyor and/or access gate system application programming interface (API) comprises or is connected to a web portal which comprises means for integrating external systems to the people conveyor and/or access gate systems, such as the first provider people conveyor and/or access gate system and/or the second provider people conveyor and/or access gate system, via the primary people conveyor and/or access gate application programming interface (API).

In one embodiment of the invention the first provider people conveyor and/or access gate system, the second provider people conveyor and/or access gate system and or further provider people conveyor and/or access gate systems are elevator, escalator and/or access gate systems comprising elevators and controlling means for the elevators, escalators and controlling means for the escalators, and/or access gates and controlling means for the access gates.

In one embodiment of the invention the primary people conveyor and/or access gate system application programming interface is connected or in communication to at least one internal application programming interface (API), such as the application programming interface (API) of the first provider people conveyor and/or access gate system, and/or to at least one external application programming interface (API), such as the application programming interface (API) of the second, the third or further provider people conveyor and/or access gate system.

In the solution of the invention an API request, e.g. from a device or a system, is received through a primary people conveyor and/or access gate system application programming interface (API). The target system of the request is determined based on the request. If the target of the API request is a first provider people conveyor and/or access gate system, the request is sent, e.g. with or without processing, to an application programming interface (API) of the first provider people conveyor and/or access gate system. If the identified target system of the request is a second, third or further provider people conveyor and/or access gate system, the request can be processed. The processed request is then sent, based on the target system, to an application programming interface (API) of the second, the third or further provider people conveyor and/or access gate system and/or a controlling interface of the second, the third or further provider people conveyor and/or access gate system.

The request can be processed so that the request corresponds the rules or format of the application programming interface (API) of the target system. The processing can for example comprise translating and/or modifying the request to be suitable for and in format of the application programming interface (API) of the target system API. In one embodiment of the invention the processing of the request and/or response is carried out with a processing means, such as a technical integrator adaptor or interface.

The APIs, which have received the request sent from the device or the system via the primary system API can send a response to the request they have received. The response from the application programming interface to which the request was sent can be received by the primary system API which can submit the response or information related to the response to a device or entity from which the original request was received. The received response can be further processed and/or sent to the device or entity from which the original request was received. APIs can return data for example in standardized formats, such as JSON (JavaScript Object Notation) or XML (Extensible Markup Language).

In one embodiment of the invention the processing of the response comprises translating and/or modifying the response according to the primary people conveyor and/or access gate system application programming interface, e.g. so that the request corresponds the rules or format of the primary people conveyor and/or access gate system application programming interface (API).

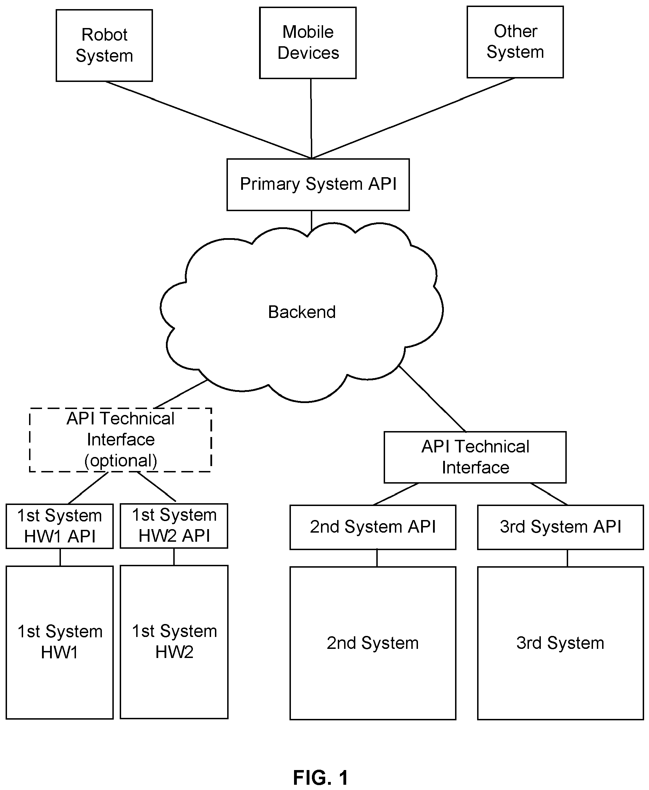

Figure 1 illustrates schematically a solution according to an example embodiment of the invention. In the example of Figure 1 the primary system API, such as a primary people conveyor and/or access gate system API, receives API-calls or requests from different devices or systems, e.g. robot system(s), mobile device(s) or other system(s). The primary system API can be connected to a backend, e.g. a server or a service, which is able to take care of the received API request and can process them and/or forward them to be processed into a correct format, e.g. by API technical interface. The API technical interface can be integrated to the backend, e.g. a server or a service, or it can be an external module or unit.

The request (with or without processing) can be transmitted to the correct system API. In the example of Figure 1 two internal systems are connected to the primary system API: 1^{st} system HW1 API, the 1^{st} system HW2 API. In the example of Figure 1 two external systems are connected to the primary system API: the 2^{nd} system API and the 3^{rd} system API. In a similar way further systems can be integrated and/or connected to the primary system API. With the solution of the invention the corresponding systems (the 1^{st} system HW1, the 1^{st} system HW2, the 2^{nd} system and the 3^{rd} or further system) can be reached via their APIs developers do not have to take care of the differences of these APIs, such as the 1^{st} system HW1 API, the 1^{st} system HW2 API, the 2^{nd} system API and the 3^{rd} (or further) system API but can communicate with the different systems via one API, such as the primary system API.

The 1^{st} system HW1 and the 1^{st} system HW2 can be systems in which for example the hardware is different, e.g. different generation, and therefore their APIs can be different from each other. The 1^{st} system HW1 and the 1^{st} system HW2 can still be from the same manufacturer and in some embodiments therefore using the API technical interface is optional, e.g. because same API format and commands can be implemented and supported already with primary system API.

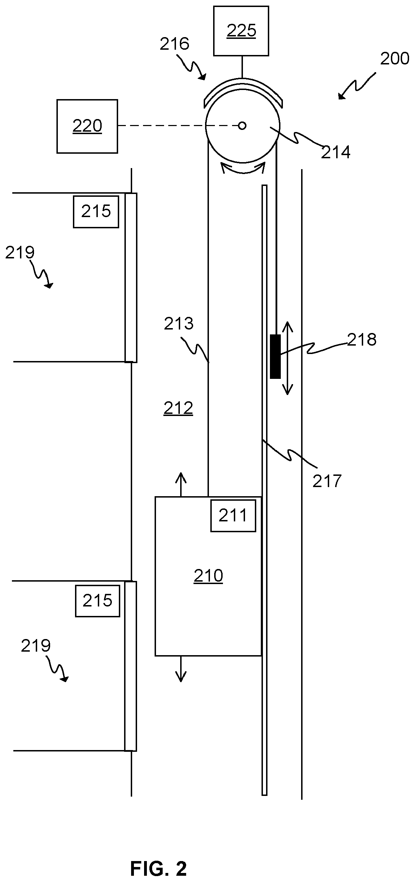

Figure 2 illustrates schematically an example elevator with which solution of the invention can be used. The elevator 200 according to an example embodiment may comprise an elevator car 210 arranged to be moved in an elevator shaft 212. The moving of the elevator car 210 may be implemented by a hoisting rope or belt 213 in connection with a traction sheave 214 or the like. Furthermore, the elevator 200 comprises an elevator motor arranged to operate, such as rotate by the rotor thereof, the traction sheave 214 for moving the elevator car 210, if not essentially directly coupled to the hoisting rope 213. The traction sheave 214 may be connected, via a mechanical connection, directly or indirectly via a gear to a shaft of the motor. The elevator 200 may comprise a machine room or be machine roomless, such as have the motor in the elevator shaft 212.

The elevator 200 may comprise at least one, or at least two, hoisting machinery brake(s) 216 configured for resisting or, preferably, preventing the movement of the motor, that is the rotor thereof, directly or via the traction sheave 214 or components thereof and/or therebetween. Furthermore, the elevator 200 may comprise a brake controller 225 configured to operate at least one of the at least one hoisting machinery brake 216. The brake controller 225 may further be in connection with other elements of the elevator 200, such as an elevator control unit and/or a safety system. The brake controller 225 may comprise an actuator (not shown) for operating the brake 216 or at least be in connection with such an actuating device.

There may additionally be, at least in some embodiments, a counterweight 218 arranged in connection with the elevator car 210 such as is known to a person skilled in the art of elevators. Still further, the elevator 200 may additionally comprise a guide rail 217 or rails 217 arranged into the elevator shaft 212 for guiding the movement of the elevator car 210.

The elevator 200 of Fig. 2 can further comprise a converter unit. The converter unit may comprise, or substantially be, an inverter or a frequency converter for connecting to and controlling the operation of the motor, and a controller in connection with the converter unit, wherein the controller is configured to operate the converter unit to provide electrical power (signals), such as having variable voltage and variable frequency, to the windings of the motor. The controller may be a separate controller device or be comprised in the converter unit, for instance.

Still further, the converter unit may be arranged to be fed by an electrical power source, such as of the elevator 200, for example from an external electrical power grid or mains power supply, or another power source, for example, a battery system. Additionally, the electrical power source may intake electrical power from the converter unit.

There may be one or several devices arranged between the electrical power source and the converter unit, such as input filter(s), circuit breaker(s), and/or contactor(s) or relay(s), and/or a device for charging the energy storage element(s) of the converter unit.

The elevator 200 preferably comprises landings 219 or landing floors 219 and, for example, landing floor doors and/or openings, between which the elevator car 210 is arranged to be moved during the normal operation of the elevator 200, such as to move persons and/or items between said floors 219.

The elevator may comprise at least one a control unit 220 unit for controlling the operation of the elevator and/or the safety system of the elevator. The control unit 220 may be a separate device or may be comprised in the other components of the elevator such as in or as a part of the electrical drive. The control unit may also be implemented in a distributed manner so that, e.g., one portion of the conveyor control unit may be comprised in the electrical drive and another portion in the elevator car. The control unit may also be arranged in distributed manner at more than two locations or in more than two devices. In one embodiment of the invention the control unit is configured to control the power units supplying power to the conveyor system. The elevator control unit can also be configured to collect status information of an elevator car and fault information when an elevator fails.

The movement of the elevator car can be at least partly controlled by an elevator control unit. When the elevator car is configured to arrive to a desired landing, the speed of the elevator car is instructed to be decelerated so that the elevator car may be stopped at the landing. Deceleration is an operation of reducing the speed of the elevator car from normal operating speed to a lower speed and/or to a stop. Deceleration may also be referred to as slowdown.

The elevator system can comprise an application programming interface (API) and this elevator system API can be accessed via the primary system API of the solution of the invention. In the example of the Figure 1, a system or multiple systems (e.g. the 1^{st} system HW1, the 1^{st} system HW2, the 2^{nd} system and/or the 3^{rd} system) can be an elevator system according to Figure 2.

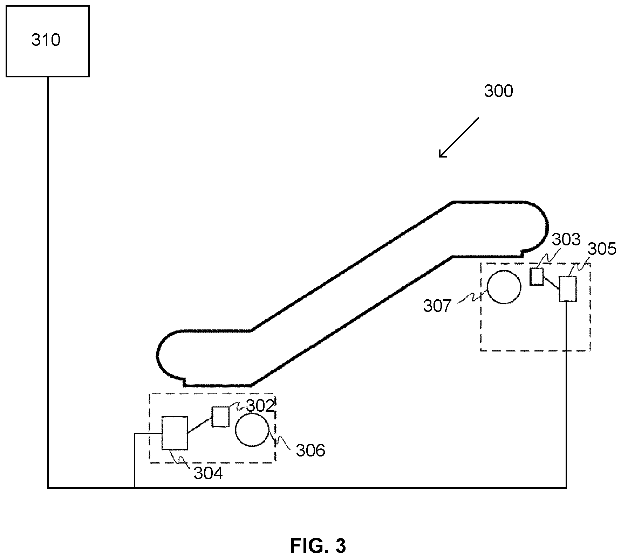

Figure 3 schematically illustrates an embodiment of an escalator with which the solution of the invention can be used. The escalator 300 may comprise a step-chain coupled to a motor 306 via a transmission 302 comprising at least a chain or belt or similar. The motor 306 may generate a rotational force via the transmission causing the step-chain to move in an intended travelling direction. A brake may be arranged to the conveyor system so that when de-energized it is configured to meet the rotating axis of the transmission and, in that manner, to brake movement of the step chain or keep the step chain standstill when the escalator system is idle. When energized, the brake opens, allowing movement of step-chain. The transmission may comprise, in the context of escalator system, a gearbox with the mentioned entities. Furthermore, the escalator system may comprise an escalator control unit 310 which may e.g. be configured to control the movement of step-chain through a control of a power supply to the motor 302 and to the escalator brake. In one embodiment of the invention the conveyor system can comprise a processing unit 304. In some embodiments a second motor 307 with a second transmission 303 may be provided, for example, at the opposite end of the step-chain. Then a second processing unit 305 may be mounted in connection to the second motor.

The escalator system can comprise an application programming interface (API) and this escalator system API can be accessed via the primary system API of the solution of the invention. In the example of the Figure 1 a system or multiple systems (e.g. the 1^{st} system HW1, the 1^{st} system HW2, the 2^{nd} system and/or the 3^{rd} system) can be an escalator system according to Figure 3.

The solution of the invention can also be utilized with access gates. As explained earlier, access gates can be for example physical barriers or checkpoints that control entry or exit to a specific area, facility, or property. Access gates can be found in many environments and buildings, e.g. residential communities, commercial buildings, industrial sites, and public facilities. Access gates can be for example turnstiles, sliding gates or swing gates which allow one person to pass through at a time. Access gates can also be connected to or integrated with access control systems. These systems may use key cards, key fobs, biometric devices, or other authentication methods to grant or deny access.

The access gate system can comprise an application programming interface (API) and this access gate system API can be accessed via the primary system API of the solution of the invention. In the example of the Figure 1 a system or multiple systems (e.g. the 1^{st} system HW1, the 1^{st} system HW2, the 2^{nd} system and/or the 3^{rd} system) can be access the gate system according to the above embodiment.

In one embodiment of the invention the application programming interface (API) request is related to at least one of the following: an elevator call, a service robot utilizing an elevator, escalator and/or access gate system, elevator escalator and/or access gate equipment and/or device status, and/or elevator, escalator and/or access gate service status.

The application programming interfaces (APIs) can be for example elevator call APIs (with which elevator call related request can be made), access API, a service robot API, an API related to technical status of the system, such as an equipment status API, service info API, real-time monitoring API, alarm and failure API, energy related API, people flow API or sensing API (e.g. communicating detecting persons or users) and/or on-site APIs (e.g. on-site elevator call API, on-site robot API, on-site real time monitoring API.

In one embodiment of the invention APIs can require authentication to ensure that only authorized users or applications can access their resources. The authentication methods can comprise at least one of the following: API keys, OAuth, JWT (JSON Web Tokens). APIs can be vulnerable to various threats such as injection attacks, unauthorized access, and data breaches. In one embodiment of the invention proper security measures, e.g. encryption and/or input validation, can implemented with at least one API.

Here are some further examples of the APIs and their functionality which can be used at least in some embodiment(s) of the solution of the invention:
- Elevator Control APIs: These APIs can provide access to elevator control functions, allowing developers to send commands to elevator systems to e.g. move elevator cars, open and close doors, and perform other control actions. They can be used for building automation and integration with smart building systems.
- Monitoring and Data APIs: Elevator, escalator and/or access gate systems can generate lot of data, comprising e.g. status information, operational statistics, and/or error logs. Monitoring and data APIs can allow developers and other systems to retrieve real-time and/or historical data from elevators, escalators and/or access gate systems, which can be used e.g. for maintenance, performance analysis and/or reporting.
- Remote Management APIs: Elevator, escalator and/or access gate systems can offer remote management APIs that enable administrators to monitor and manage system operations from a centralized location. These APIs can be used to perform tasks like updating firmware, diagnosing issues, and changing system settings.
- Access Control APIs: Elevator, escalator and/or access gate systems can be integrated with access control systems to control access based on user permissions. Access control APIs can allow developers and systems to manage access rights, configure access policies, and integrate elevators, escalators and/or access gates with card access or biometric systems.
- Diagnostic and Maintenance APIs: Elevator, escalator and/or access gate systems can use diagnostic and maintenance APIs to remotely access elevator, escalator and/or access gate system health data, perform diagnostics, and schedule preventive maintenance based on real-time performance metrics.
- User Interface APIs: These APIs can enable the development of user interfaces for passengers or building operators to interact with elevator, escalator and/or access gate systems. This can comprise touchscreen control panels, mobile apps, and digital signage displays.

The APIs used in the solution of the invention can for example be implemented as web APIs. APIs can be exposed over the internet using standard web protocols such as HTTP. Examples include RESTful APIs, SOAP APIs, and GraphQL APIs. Web APIs can often use HTTP verbs (GET, POST, PUT, DELETE, etc.) to define the type of operation being performed on a resource. For example, a GET request is used to retrieve data, while a POST request is used to create or update data.

In the following some example API request are presented. These are only examples and are used to illustrate the idea which can implemented with the solution of the invention.

Examples of primary system API and target system API calls:

### • Example 1. - API Call to Get Elevator Status

API call:

   ```
 ‴http
 GET /api/v1/conveyors/{conveyor_id}/status
 ‴
```
This example API call retrieves the status of a specific people conveyor (elevator, escalator, or access gate). The '{conveyor_id}' in the URL should be replaced with the ID of the conveyor.
Response:

   ```
                ‴json
                {
                 "conveyor_id": "123",
                 "status": "operational",
                 "last_maintenance": "2024-01-21T14:30:00Z" }
```
This primary system API call can be converted to a target system API call specific to the target system, e.g. manufacturer of the conveyor. For example, if the conveyor is an elevator from a "first manufacturer", the primary system API call can be converted to a "first manufacturer" specific API call, for example 'GET /api/v1/first-manufacturer/elevators/{elevator_id}/status'.

### • Example 2. API Call to Control Access Gate

API call:

   ```
                ‴http
                POST /api/v1/gates/{gate_id}/control
                ‴
```
This API call sends a control command to a specific access gate. The '{gate_id}' in the URL should be replaced with the ID of the gate.
Request Body:

   ```
                ‴json
                {
                 "command": "open_gate" }
```
Response:

   ```
                ‴json
                {
                 "status": "success",
                 "message": "Command received and is being processed." } ‴
```
This primary system API call can be converted to a target system API call specific to the target system, e.g. manufacturer of the access gate. For example, if the access gate is an access gate from a "second manufacturer", the primary system API call may be converted to a "second manufacturer" specific API call like 'POST /api/v1/second-manufacturer/gates/{gate_id}/commands'.

Examples of primary system API calls (which can be translated to target system API calls if necessary):

### • Example 1. API Call to Get Elevator Status

API call:

   ```
                ‴http
                GET /api/v1/elevators/{elevator_id}/status
                ‴
```
This API call retrieves the status of a specific elevator. The '{elevator_id}' in the URL should be replaced with the ID of the elevator.
Response:

   ```
                ‴json
                {
                 "elevator_id": "123",
                 "status": "operational",
                 "last_maintenance": "2024-01-21T14:30:00Z" } ‴
```

### • Example 2. - API Call to Send a Command to an Elevator

API call:

   ```
                ‴http
                POST /api/v1/elevators/{elevator_id}/commands
                ‴
```
This API call sends a command to a specific elevator. The '{elevator_id}' in the URL should be replaced with the ID of the elevator.
Request Body:

   ```
                ‴json
                {
                 "command": "move _to_floor",
                 "floor_number": 5 }
                ‴
```
Response:

   ```
                ‴json
                {
                 "status": "success",
                 "message": "Command received and is being processed." }
‴
```

### • Example 3. - API Call to Get Elevator Maintenance History

API call:

   ```
                ‴http
                GET /api/v1/elevators/{elevator id}/maintenance_history
                ‴
```
This API call retrieves the maintenance history of a specific elevator. The '{elevator_id}' in the URL should be replaced with the ID of the elevator.
Response:

   ```
                ‴json
                {
                 "elevator_id": "123",
                 "maintenance_history": [
                   {"date": "2024-01-21T14:30:00Z",
                    "maintenance_type": "annual",
                    "technician": "John Doe" },
                   {
                    "date": "2023-12-20T10:15:00Z",
                    "maintenance_type": "repair",
                    "technician": "Jane Smith"
                }
              ]
            }
            ...
```

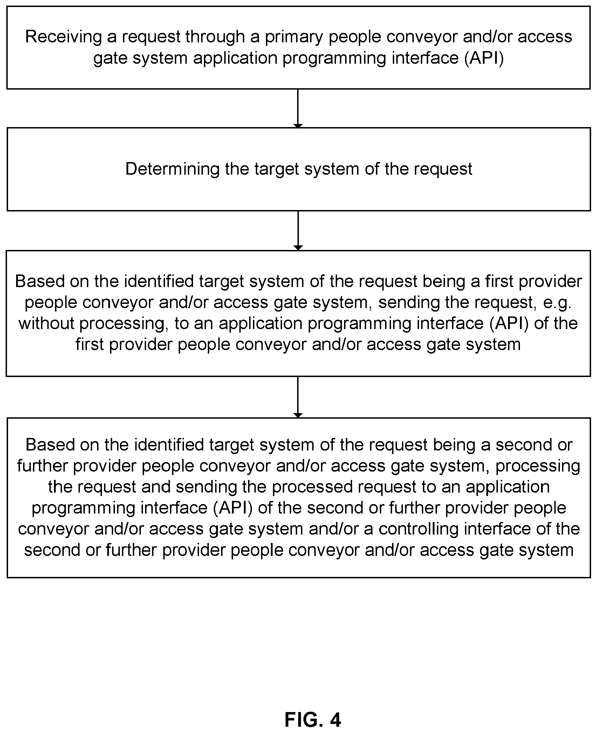

Figure 4 illustrates one example method according to an example embodiment of the invention. The example method comprises receiving a request through a primary people conveyor and/or access gate system application programming interface (API), determining the target system of the request, based on the identified target system of the request being a first provider people conveyor and/or access gate system, sending the request, e.g. without processing, to an application programming interface (API) of the first provider people conveyor and/or access gate system, and based on the identified target system of the request being a second or further provider people conveyor and/or access gate system, processing the request and sending the processed request to an application programming interface (API) of the second or further provider people conveyor and/or access gate system and/or a controlling interface of the second or further provider people conveyor and/or access gate system.

A server, an elevator unit, an escalator unit, an access gate unit and/or a control unit or a controller of the system (e.g. an elevator, escalator and/or access gate control unit) may comprise one or more processors, one or more memories being volatile or non-volatile for storing portions of computer program code and any data values and possibly one or more user interface units. The mentioned elements may be communicatively coupled to each other with e.g. an internal bus. The one or more processors of the processing unit may be any suitable processor for processing information and control the operation of the unit, among other tasks. The memory unit may store portions of computer program code and any other data, and the processing unit may cause the unit to operate as described above by executing at least some portions of the computer program code stored in the memory unit. Furthermore, the one or more memories of the memory unit may be volatile or nonvolatile. Moreover, the one or more memories are not limited to a certain type of memory only, but any memory type suitable for storing the described pieces of information may be applied in the context of the invention. The communication unit may be based on at least one known communication technologies, either wired or wireless, in order to exchange pieces of information as described earlier. The communication unit can provide an interface for communication with any external unit, such as the brake control unit of the drive unit, positioning system, database and/or any external systems. The unit can also comprise a user interface comprising I/O devices, such as buttons, keyboard, touch screen, microphone, loudspeaker, display and so on, for receiving input and out-putting information.

The verb "meet" in context of a levelling speed limit is used in this patent application to mean that a predefined condition is fulfilled. For example, the predefined condition may be that the levelling speed limit value is reached and/or exceeded.

The specific examples provided in the description given above should not be construed as limiting the applicability and/or the interpretation of the appended claims. Lists and groups of examples provided in the description given above are not exhaustive unless otherwise explicitly stated.

## Claims

1. A method for handling people conveyor and/or access gate system application programming interface (API) requests,
the method comprising:
receiving a request through a primary people conveyor and/or access gate system application programming interface (API),
determining the target system of the request,
based on the identified target system of the request being a first provider people conveyor and/or access gate system, sending the request, e.g. without processing, to an application programming interface (API) of the first provider people conveyor and/or access gate system, and
based on the identified target system of the request being a second or further provider people conveyor and/or access gate system, processing the request and sending the processed request to an application programming interface (API) of the second or further provider people conveyor and/or access gate system and/or a controlling interface of the second or further provider people conveyor and/or access gate system.

2. A method according to claim 1, wherein the processing of the request comprises translating and/or modifying the request to be suitable for the application programming interface (API) of the first, second and/or further provider people conveyor and/or access gate system, e.g. so that the request corresponds the rules or format of the application programming interface (API) of the first, second and/or further provider people conveyor and/or access gate system.

3. A method according to claim 1 or 2, wherein the primary people conveyor and/or access gate system application programming interface is connected or in communication to at least one internal application programming interface (API), such as the application programming interface (API) of the first provider people conveyor and/or access gate system, and/or to at least one external application programming interface (API), such as the application programming interface (API) of the second or further provider people conveyor and/or access gate system.

4. A method according to any previous claim, wherein the method further comprises:
receiving a response from the application programming interface to which the request was sent, and
submitting the response or information related to the response to a device or entity from which the request was received.

5. A method according to claim 4, wherein the method further comprises processing the received response and sending the processed response to the device or an entity from which the request was received.

6. A method according to claim 5, wherein the processing of the response comprises translating and/or modifying the response according to the primary people conveyor and/or access gate system application programming interface, e.g. so that the request corresponds the rules or format of the primary people conveyor and/or access gate system application programming interface (API).

7. A method according to any previous claim, wherein the processing of the request and/or response is carried out with a processing means, such as a technical integrator adaptor or interface.

8. A method according to any previous claim, wherein the application programming interface (API) request is related to at least one of the following: an elevator call, a service robot utilizing an elevator, escalator and/or access gate system, elevator escalator and/or access gate equipment and/or device status, and/or elevator, escalator and/or access gate service status.

9. A method according to any previous claim, wherein the primary people conveyor and/or access gate system application programming interface (API) comprises or is connected to a web portal which comprises means for integrating external systems to the people conveyor and/or access gate systems, such as the first provider people conveyor and/or access gate system and/or the second provider people conveyor and/or access gate system, via the primary people conveyor and/or access gate application programming interface (API).

10. A method according to any previous claim, wherein the first provider people conveyor and/or access gate system, the second provider people conveyor and/or access gate system and or further provider people conveyor and/or access gate systems are elevator (200), escalator (300) and/or access gate systems comprising elevators and controlling means for the elevators, escalators and controlling means for the escalators, and/or access gates and control means for the access gates.

11. An arrangement, such as a server or a service, for handling people conveyor and/or access gate system application programming interface (API) requests,
wherein the arrangement is configured to:
receive a request through a primary people conveyor and/or access gate system application programming interface (API),
determine the target system of the request,
based on the identified target system of the request being a first provider people conveyor and/or access gate system, to send the request, e.g. without processing, to an application programming interface (API) of the first provider people conveyor and/or access gate system, and
based on the identified target system of the request being a second or further provider people conveyor and/or access gate system, to process the request and to send the processed request to an application programming interface (API) of the second or further provider people conveyor and/or access gate system and/or a controlling interface of the second or further provider people conveyor and/or access gate system.

12. An arrangement according to claim 11, wherein the arrangement is configured to carry out a method according to any claim 2 - 10.

13. A people conveyor and/or access gate system, such as an elevator system (200), an escalator system (300) and/or an access gate system, comprising an arrangement, such as a server or a service, for handling a people conveyor system application programming interface (API) request,
wherein the arrangement is an arrangement according to claim 11 or 12.

14. A computer program comprising instructions which, when executed by a computer, such as a server or an arrangement, cause the computer to carry out the method according to any of claims 1 - 10.

15. A computer-readable medium comprising the computer program according to claim 14.
